**Europäisches Patentamt**

**European Patent Office**

**Office européen des brevets**

(11) Veröffentlichungsnummer: **0 293 928**

**A1**

## (12) EUROPÄISCHE PATENTANMELDUNG

(21) Anmeldenummer: **88108936.1**

(22) Anmeldetag: **03.06.88**

(51) Int. Cl.4: **B63B 35/82**

(30) Priorität: **05.06.87 DE 3718825**
**14.08.87 DE 3727227**

(43) Veröffentlichungstag der Anmeldung:
**07.12.88 Patentblatt 88/49**

(84) Benannte Vertragsstaaten:
**AT BE CH DE ES FR GB GR IT LI LU NL SE**

(71) Anmelder: **Marker, Hannes**
**Alpspitzstrasse 37**
**D-8100 Garmisch-Partenkirchen(DE)**

(72) Erfinder: **Marker, Hannes**
**Alpspitzstrasse 37**
**D-8100 Garmisch-Partenkirchen(DE)**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Längenverstellbarer Gabelbaum.**

(57) Die Erfindung betrifft einen längenverstellbaren Gabelbaum, mit einem vorderen und einem hinteren Gabelbaumteil bei dem freie Endabschnitte der Holmstücke (1) vorzugsweise des hinteren Gabelbaumteils mit beträchtlichem Spiel in rohrförmige Holmstücke (2) des vorderen Gabelbaumteils eingesteckt sind. Die ineinander gesteckten Holmstücke (1. 2) des vorderen und des hinteren Gabelbaumteils sind mittels Rastvorrichtungen (4, 5; 4′, 5; 4″, 5) formschlüssig miteinander in einer ausgewählten Einschublänge verbunden, die erste und zweite Rastelemente (4, 4′, 4″ bzw. 5) aufweisen, wobei die ersten Rastelemente (4, 4′, 4″) an den Holmstücken (2) des vorderen und die zweiten Rastelemente (5) an den Holmstükken (1) des hinteren Gabelbaumteils angeordnet sind. Die Außenabmessungen der die einen Rastelemente (5) tragenden Abschnitte der inneren Holmstücke (1) sind beträchtlich kleiner als die Innenabmessungen der die anderen Rastelemente (4, 4′, 4″) tragenden Abschnitte von mit den äußeren Holmstücken (2) verbundenen Muffen (3, 3′) oder der äußeren Holmstücke (2). Die Rastvorrichtungen umfassen ein eine Freigabestellung und eine Sperrstellung aufweisendes Sperrglied (10; 31; 36), das in seiner Sperrstellung das freie Spiel zwischen den die Rastelemente (4, 4′, 4″, 5) tragenden Abschnitten aufhebt, wobei die Holmstücke (1, 2) in axialer Richtung verriegelt sind.

FIG.1

## Längenverstellbarer Gabelbaum

Die Erfindung betrifft einen längenverstellbaren Gabelbaum, mit einem vorderen und einem hinteren Gabelbaumteil, bei dem freie Endabschnitte der Holmstücke vorzugsweise des hinteren Gabelbaumteils mit beträchtlichem Spiel in rohrförmige Holmstücke des vorderen Gabelbaumteils eingesteckt sind und mit jeweils die ineinandergesteckten Holmstücke des vorderen und des hinteren Gabelbaumteils formschlüssig miteinander in einer ausgewählten Einschublänge verbindenden Rastvorrichtungen mit ersten und zweiten Rastelementen, wobei die ersten Rastelemente an den Holmstücken des vorderen und die zweiten Rastelemente an den Holmstücken des hinteren Gabelbaumteils angeordnet sind.

Seit einiger Zeit sind bereits längenverstellbare Gabelbäume bekannt, bei denen die Holmstücke eines hinteren Gabelbaumteils in rohrförmige Holmstücke des vorderen Gabelbaumteils eingesetzt und mit diesen fest verbindbar sind. Dabei hat es sich gezeigt, daß, wenn die Holmstücke nahezu spielfrei ineinander geführt werden, bereits geringe Sandmengen, im Extremfall sogar ein einzelnes Sandkorn, die Holmstücke der Gabelbaumteile so gegeneinander verklemmen können, daß ein Verschieben kaum noch möglich ist.

Aus dem deutschen Gebrauchsmuster G 82 02 724 01 ist nun bereits ein längenverstellbarer Gabelbaum bekannt, bei dem die inneren Holmstücke des hinteren Gabelbaumteils mit beträchtlichem Spiel in den äußeren Holmstükken des vorderen Gabelbaumteils geführt sind, so daß zwischen diesen genügend Luft ist, um ein Verklemmen der Holmstücke durch eingedrungenen Sand zu verhindern. Bei diesem bekannten Gabelbaum sind jedoch Rastvorrichtungen zum Verriegeln des hinteren Gabelbaumteils gegen das vordere Gabelbaumteil vorgesehen, durch die die Holmstücke des hinteren Gabelbaumteils nahezu spielfrei hindurchgeführt sind. Dringt nun Sand in den Bereich der Rastvorrichtungen ein, so kann es wiederum zu einem Verklemmen der inneren Holmstücke gegenüber der spielfreien Führung und damit gegenüber den äußeren Holmstükken kommen, so daß nach wie vor die gleichen Probleme bestehen.

Auch bei diesem bekannten längenverstellbaren Gabelbaum kann also ein Verklemmen des hinteren Gabelbaumteils gegenüber dem vorderen Gabelbaumteil auftreten, so daß ein Lösen praktisch nur noch mit Werkzeugen, wie z.B. einem Hammer, möglich ist. Ein derartiger Werkzeugeinsatz kann jedoch ohne weiteres zur Beschädigung des Gabelbaums führen.

Demgegenüber liegt nun der Erfindung die Aufgabe zugrunde, einen längenverstellbaren Gabelbaum der eingangs genannten Art so weiterzubilden, daß seine Längenverstellbarkeit auf einfache und leichte Weise ermöglicht und stets gewährleistet ist, ohne daß die inneren Holmstükke durch Fremdpartikel, wie z.B. Sandkörner, in den äußeren Holmstücken oder in den äußeren Holmstücken zugeordneten Teilen einer Rastvorrichtung blockiert werden können.

Diese Aufgabe wird erfindungsgemäß dadurch gelöst, daß die Außenabmessungen der die einen Rastelemente tragenden Abschnitte der inneren Holmstücke beträchtlich kleiner als die Innenabmessungen der die anderen Rastelemente tragenden Abschnitte von mit den äußeren Holmstücke verbundenen Muffen oder den äußeren Holmstücken sind, und daß jede Rastvorrichtung ein eine Freigabestellung und eine Sperrstellung aufweisendes Sperrglied umfaßt, das in seiner Sperrstellung das freie Spiel zwischen den die Rastelemente tragenden Abschnitten aufhebt, wobei die Holmstücke in axialer Richtung verriegelt sind.

Durch das erfindungsgemäß im Bereich der Rastelemente vorgesehene beträchtliche Spiel zwischen den inneren Holmstücken und den diese dort umgebenden Muffen oder der äußeren Holmstücke wird sichergestellt, daß sich auch dort kein Sand oder andere Fremdpartikel festsetzen können. Gleichzeitig wird jedoch durch das zusätzliche, der Rastvorrichtung zugeordnete Sperrglied, das zwischen einer Sperrstellung und einer Freigabestellung bewegbar ist, sichergestellt, daß die eine Verriegelung der inneren und äußeren Holmstücke gegeneinander bewirkenden Rastelemente einwandfrei formschlüssig ineinander eingreifen können und fest in ihrem Rasteingriff ineinander gehalten werden.

Durch die Erfindung wird also eine einwandfreie und sichere Rastverriegelung zwischen den inneren und äußeren Holmstücken des vorderen und hinteren Gabelbaumteils geschaffen, ohne daß dazu eine ständige spielfreie Führung des inneren Holmstücks im Bereich der Rastelemente erforderlich wäre. Außerdem bewirken die relativ großen Abstände zwischen den inneren Holmstücken und den diese umgebenden Abschnitte, daß eingedrungener Sand ohne weiteres und insbesondere ohne eine Verschiebebewegung zu blockieren wieder ausfließen kann.

Bei einem besonders einfach herzustellenden Ausführungsbeispiel der Erfindung ist vorgesehen, daß in die inneren Holmstücke eine Vielzahl von axial voneinander beabstandeten Rastsicken als erste Rastelemente eingedrückt sind und daß die komplementär zu den ersten Rastelementen ausgebildeten zweiten Rastelemente als mit den äußeren Holmstücken verbundene Rastvorsprünge ausgebildet sind, wobei die Rastvorsprünge an fest mit den äußeren Holmstücken verbundenen Muffen angeordnet sind.

Durch diese spezielle Zuordnung der Rastvorsprünge und der Rastvertiefungen bzw. Rastsicken zu den äußeren bzw. inneren Holmstücken sowie durch die Verwendung von mit den äußeren Holmstücken zu verbindenden Muffen wird es neben einem konstruktiv und herstellungsmäßig einfachem Aufbau auch ermöglicht, für die die beweglichen Sperrglieder tragenden Muffen wasser- und vorzugsweise seewasserbeständige Kunststoffe zu verwenden, wodurch die Haltbarkeit und damit die Funktionsfähigkeit der Rastvorrichtungen dauernd sichergestellt wird.

Ein weiteres Ausführungsbeispiel der Erfindung zeichnet sich dadurch aus, daß die Rastvorsprünge als quer zur Längsrichtung der Holmstücke verlaufende Raststege ausgebildet sind, die starr an den äußeren Holmstücken befestigt sind und daß die Höhe der Raststege etwas kleiner als das freie Spiel zwischen den inneren Holmstükken und den die Raststege tragenden, den äußeren Holmstücken zugeordneten Abschnitten ist. Hierdurch wird es ermöglicht, daß insbesondere für die Verrastung der äußeren und inneren Holmstücke der beiden Gabelbaumteile keine elastischen Elemente vorgesehen werden müssen.

Eine weitere Ausbildung der Erfindung ist dadurch gekennzeichnet, daß die Sperrglieder jeweils in ihrer Sperrstellung den zugeordneten Rastelementen diametral gegenüberliegend angeordnet sind, wobei das jeweilige Sperrglied als Sperrarm eines Winkelhebels ausgebildet ist, der - schwenkbar auf einer am äußeren Holmstück befestigten Achse gelagert ist, wobei der Sperrarm in seiner Sperrstellung soweit in das Innere des äußeren Holmstücks oder der Muffe ragt, daß der Rastvorsprung in einer ausgewählten Rastvertiefung verriegelt ist.

Ein weiteres Ausführungsbeispiel der Erfindung ist dadurch gekennzeichnet, daß die den jeweiligen Winkelhebel tragende Achse zur Holmlängsrichtung parallel angeordnet ist.

Um das innere Holmstück nicht nur zwischen den Rastelementen und dem Sperrglied zu halten, sondern auch seitlich dazu eine gewisse Führung zu ermöglichen, ist bei einer anderen Ausführungsform der Erfindung vorgesehen, daß die den jeweiligen Winkelhebel tragende Achse quer zur Holmlängsrichtung angeordnet ist, daß die mit dem inneren Holmstück in Eingriff bringbare Fläche des Sperrarms komplementär zur Außenfläche des inneren Holmstücks ausgebildet ist und daß der Sperrarm in seiner Sperrstellung das innere Holmstück teilweise seitlich umfaßt.

Um ferner trotz der das innere Holmstück des längenverstellbaren Gabelbaums umgebenden freien Spiel eine einwandfreie Führung des inneren Holmstücks im Bereich der Rastelemente zu gewährleisten, ist bei einem bevorzugten Ausführungsbeispiel der Erfindung vorgesehen, daß das äußere Holmstück oder die Muffe im Bereich der Rastelemente eine derartige Querschnittsform aufweist, daß das innere Holmstück nur in der durch die Rastelemente und das Sperrglied gegebenen Ebene Spiel hat. Hierdurch wird eine praktisch spielfreie Führung des inneren Holmstücks gewährleistet, ohne daß dadurch die Gefahr herbeigeführt wird, daß sich Sandkörner oder andere Fremdpartikel zwischen den Führungspunkten festsetzen können. Dies wird insbesondere dadurch verhindert, daß für die Führung quer zur durch die Rastelemente und das Sperrglied gegebenen Ebene lediglich punkt- bzw. linienförmige Führungsbereiche nötig sind, zwischen denen sich keine Sandkörner verkeilen können.

Bei einem anderen Ausführungsbeispiel der Erfindung ist vorgesehen, daß der jeweilige Rastvorsprung als Raststift an einer freigeschnittenen Federzunge angeordnet ist, die am äußeren Holmstück oder einer mit dem äußeren Holmstück fest verbundenen Muffe vorgesehen ist, und daß das Sperrglied in seiner Sperrstellung die Federzunge in das Innere des äußeren Holmstücks oder der Muffe hineindrückt.

Durch diese erfindungsgemäße Ausbildung läßt sich erreichen, daß das innere Holmstück nicht nur sicher in axialer Richtung gegen das äußere Holmstück verriegelt ist, sondern daß es gleichzeitig gegen ein Verdrehen gesichert ist.

Bei einer vorteilhaften Weiterbildung der Erfindung ist vorgesehen, daß das Sperrglied als Sperrnocken an der Innenoberfläche einer auf das äußere Holmstück oder die Muffe aufgesteckten Hülse ausgebildet ist, wobei der Sperrnocken mit einem keilförmigen Vorsprung mit Nockenfläche zusammenwirkt, der im Bereich des Raststiftes auf der Außenseite der Federzunge vorgesehen ist. Durch diese Ausbildung läßt es sich erreichen, daß das Sperrglied sicher gegen Beschädigungen durch Stöße oder Schläge, wie sie z.B. beim Abladen eines Gabelbaums von einem Fahrzeug häufig auftreten, geschützt ist.

Um eine besonders einfache Handhabung des Gabelbaums zu ermöglichen, ist ferner vorgesehen, daß die Hülse drehbar oder axial verschiebbar auf dem äußeren Holmstück oder der Muffe angeordnet ist, so daß der Sperrnocken zwischen seiner Freigabe- und seiner Sperrstellung hinund herbewegbar ist.

Bei einem besonders bevorzugten, praktischen Ausführungsbeispiel der Erfindung ist weiter vorgesehen, daß der Raststift eine Länge aufweist, die etwas größer als das freie Spiel zwischen dem inneren Holmstück und dem äußeren Holmstück oder der Muffe ist, so daß der Raststift bei in seiner Freigabestellung befindlichem Sperrglied und in ihrer Neutralstellung befindlichen Federzunge teilweise in eine der Rastsicken am inneren Holmstück eingreift, und daß die Federzunge soweit nach außen ausfederbar ist, daß der Raststift außer Eingriff mit der Rastsicken gelangt.

Durch die erfindungsgemäß vorgesehene Vorrastung, die dadurch bewirkt wird, daß der Raststift bereits teilweise in eine Rastsicke eingreift, wenn sich die Federzunge in ihrer Neutralstellung befindet, wenn sie also weder ein- noch ausgefedert ist, wird also eine ausgewählte Gabelbaumlänge bereits vorläufig festgelegt, ohne daß ein eventuell erforderliches Nachstellen der Gabelbaumlänge dadurch behindert würde. Erst wenn die endgültige Gabelbaumlänge feststeht, braucht diese für den anschließenden Einsatz des Gabelbaums festgelegt und gesichert zu werden.

Um die das Sperrglied bzw. den Sperrnocken tragende Hülse sicher auf der Muffe oder dem äußeren Holmstück zu halten, ist bei einer anderen Weiterbildung der Erfindung vorgesehen, daß die den Sperrnocken tragende Hülse im Bereich des Sperrnockens einen Abschnitt mit vergrößertem Durchmesser aufweist, der durch eine ringförmige Schulter begrenzt wird, hinter die der keilförmige Vorsprung mit geringem axialen Spiel greift.

Um die Stabilität der erfindungsgemäßen Rastvorrichtung weiter zu vergrößern, wobei insbesondere die Verdrehsicherheit des inneren Holmstücks gegenüber dem äußeren verbessert werden soll, ist bei einem weiteren Ausführungsbeispiel der Erfindung vorgesehen, daß umfangsmäßig verteilt zwei oder mehr mit Raststiften versehene Federzungen am äußeren Holmstück oder der Muffe angeordnet sind, wobei jedem Raststift entsprechende Rastsicken und Sperrnocken zugeordnet sind.

Bei einem weiteren praktischen Ausführungsbeispiel der Erfindung ist vorgesehen, daß die jeweiligen Sperrglieder zumindest in ihrer Sperrstellung verrastbar sind. Hierdurch wird erreicht, daß sich die jeweiligen Sperrglieder nicht unbeabsichtigt aus ihrer Sperrstellung lösen können, wodurch der sichere Einsatz des Gabelbaums beim Segeln verbessert wird.

Ein weiteres Ausführungsbeispiel der Erfindung wird dadurch geschaffen, das der Rastvorsprung am Sperrglied vorgesehen ist, daß als in Richtung auf seine Sperrstellung federbeaufschlagter Sperrschieber ausgebildet ist, der gleitend verschiebbar am äußeren Holmstück angeordnet ist, wobei die Verschieberichtung des Sperrschiebers mit der Einsteckrichtung des inneren Holmstücks in das äußere Holmstück einen spitzen Winkel $\alpha$ einschließt.

Durch die erfindungsgemäße Anordnung des Rastvorsprungs an einem unter einem spitzen Winkel zur Einschubrichtung des inneren Holmstücks angeordneten Rastschieber wird erreicht, daß der Rastschieber mit nach vorne gezogen wird, wenn das innere Holmstück mit einer Kraft in Einschubsrichtung beaufschlagt wird, wie dies beim Segeln ständig der Fall ist. Der Rastschieber drückt dabei den Rastvorsprung noch fester in die zugeordnete Rastsicke am inneren Holmstück und gleichzeitig das innere Holmstück fest gegen die Innenseite des äußeren Holmstücks. Hierdurch ergibt sich eine selbst verstärkende Sicherung der Verrastung zwischen innerem und äußerem Holmstück. Andererseits wird beim Herausziehen des inneren Holmstücks aus dem äußeren Holmstück der Rastschieber nach hinten mitgenommen, wobei er auch nach außen ausweicht, so daß sich das innere Holmstück ratschend aus dem äußeren Holmstück herausziehen läßt, ohne daß der Rastschieber von Hand in seine Freigabestellung gebracht werden müßte.

Neben einer besonders sicheren axialen Verrastung von innerem und äußerem Holmstück ermöglicht dieses Ausführungsbeispiel der Erfindung also auch eine sehr einfache Handhabung eines längenverstellbaren Gabelbaums.

Aufgrund der erfindungsgemäßen Selbstsicherung der Verrastung braucht die den Rastschieber in seine Sperrstellung schiebende Federkraft nur relativ gering zu sein, so daß sich dieser ohne großen Kraftaufwand in seine Freigabestellung verschieben läßt. Hierdurch wird ebenfalls das ratschende Herausziehen des inneren Holmstücks erleichtert.

Besonders vorteilhaft ist es bei diesem Ausführungsbeispiel der Erfindung, wenn der Winkel $\alpha$ im Bereich zwischen 5° und 50°, vorzugweise zwischen 15° und 35° und inbesondere zwischen 20° und 25° liegt.

Obwohl es prinzipiell möglich ist, den Rastvorsprung symmetrisch auszubilden, ist bei einem bevorzugten Ausführungsbeispiel der Erfindung vorgesehen, daß der Rastvorsprung als Rastzahn ausgebildet ist, dessen in Einsteckrichtung des inneren Holmstücks vordere Flanke einen vorzugsweise flacheren Winkel mit der Einsteckrichtung einschließt als seine hintere Flanke. Hierdurch wird zum einen die Kraftübertragung vom inneren Holmstück auf den Rastschieber für die Selbstsicherung der Verrastung wesentlich verbessert, während gleichzeitig durch die flachere vordere Flanke des Rastzahns die Ausziehbewegung, bei der Rastzahn über die einzelnen Rastsicken hinwegratscht erleichtert wird. Zusätzlich wird dadurch auch ein geringerer Materialverschleiß sowohl am Rastzahn als auch an den Rastsicken erzielt.

Bei einer praktischen Weiterbildung der Erfindung ist vorgesehen, daß der Winkel, den die hintere Flanke des Sperrzahns mit der Einsteckrichtung des inneren Holmstücks einschließt im Bereich zwischen 45° und 135°, vorzugsweise zwischen 70° und 110° und insbesondere bei 90° liegt.

Eine weitere Ausgestaltung der Erfindung zeichnet sich dadurch aus, daß der Rastvorsprung als Raststift ausgebildet ist, wobei das freie Ende des zylindrischen Raststiftes halbkugelförmig ausgebildet ist.

Durch diese erfindungsgemäße Ausbildung des Rastvorsprungs läßt sich neben einer Verringerung des Verschleiß beim Gebrauch auch noch eine Sicherung des inneren Holmstücks gegen ein Verdrehen in bezug auf das äußere Holmstück erreichen.

Um ferner die selbst sichernde Funktion der Verrastung zu vergrößern, ohne das Herausziehen bzw. Herausratschen des inneren Holmstücks zu erschweren, ist bei einer Weiterbildung der Erfindung vorgesehen, daß das freie Ende des zylindrischehn Raststiftes auf der in Einsteckrichtung des inneren Holmstücks vorderen Seite einen in etwa viertelkugelförmigen Abschnitt aufweist, dessen Krümmungsradius größer ist als der eines entsprechenden viertelkugelförmigen Abschnitts auf der hinteren Seite des Raststiftes.

Um das innere Holmstück gegen Beschädigungen infolge von zu hohem Druck des Rastschiebers auf das innere Holmstück zu - schützen, ist bei einer weiteren Ausführungsform der Erfindung vorgesehen, daß am Rastschieber eine Anschlagfläche vorgesehen ist, die mit einer am äußeren Holmstück vorgesehenen Anschlagkante zusammenwirkt, um eine vordere Endstellung des Rastschiebers festzulegen.

Hierbei wird der Druck durch den Rastschieber auf das innere Holmstück auf einen Maximalwert beschränkt, da der Rastschieber gegen die Anschlagkante anstößt, wenn das innere .Holmstück und das äußere Holmstück in ihre endgültige Rohr zu Rohr luftfreie Position gebracht sind. Treten nun noch größere Kräfte auf, die versuchen, das innere Holmstück noch weiter in das äußere Holmstück hineinzuschieben, so werden diese Kräfte von der entsprechenden Rastsicke auf den Rastzahn und damit über den Rastschieber auf die Anschlagkante am äußeren Holmstück weitergeleitet, ohne daß die Einwärtsbewegung des Rastschiebers verstärkt wird.

Um schließlich eine einfache Verkürzung des Gabelbaums durch Einschieben des inneren Holmstücks zu ermöglichen, ist bei einem weiteren praktischen Ausführungsbeispiel der Erfindung vorgesehen, daß der Rastschieber mittels eines Betätigungszapfens entgegen der Federkraft in seine Freigabestellung zurückziehbar ist.

Hierdurch läßt sich der Rastschieber ganz leicht in seine Freigabestellung zurückziehen, so daß das innere Holmstück beliebig in das äußere Holmstück eingeschoben werden kann.

Bei einer vorteilhaften Weiterbildung der Erfindung ist vorgesehen, daß der Betätigungszapfen beweglich am Rastschieber befestigt ist, so daß er zwischen einer Freigabestellung, in der er zurückziehbar ist, und einer Sperrstellung hin- und herbewegbar ist, in der er gegen einen Sicherungsanschlag anliegt, durch den er gegen ein Zurückziehen gesichert ist.

Durch die erfindungsgemäß vorgesehene Sicherungsmöglichkeit für den Betätigungszapfen bzw. den Rastschieber, die dafür sorgt, daß der Rastschieber bei in seiner Sperrstellung befindlichem Betätigungszapfen nicht entgegen der ihn beaufschlagenden Federkraft nach hinten verschoben werden kann, wird ein unerwünschtes Herausziehen des inneren Holmstücks aus dem äußeren verhindert. Diese Sicherungsmöglichkeit für den Rastschieber ist insbesondere dann von Vorteil, wenn auf einen erfindungsgemäßen längenverstellbaren Gabelbaum Kräfte einwirken, die entgegen der Einsteckrichtung des inneren Holmstücks in das äußere Holmstück wirken. Derartige Kräfte können beispielsweise dann auftreten, wenn bei Stürzen mit einem Segelbrett der Mast hart auf das Wasser aufschlägt und seine Spitze dabei weit zurückgebogen wird.

Bei einer ersten praktischen Ausführungsform dieser Weiterbildung der Erfindung ist vorgesehen, daß der Betätigungszapfen als T-förmiger Betätigungsknebel ausgebildet ist, der um eine senkrecht auf dem Rastschieber stehende Achse drehbar ist, und daß der Sicherungsanschlag am hinteren Ende des Schlitzes angeordnet ist.

Bei einer anderen Ausführungsform der Erfindung ist vorgesehen, daß der Betätigungszapfen um eine parallel zur Verschieberichtung des Rastschiebers liegende Achse in seine Sperrstellung umklappbar am Rastschieber gelagert ist und daß der Sicherungsanschlag seitlich neben dem Schlitz angeordnet ist.

Eine weitere praktische Ausgestaltung der Erfindung zeichnet sich dadurch aus, daß der Betätigungszapfen um eine quer zur Verschieberichtung des Rastschiebers liegende Achse nach hinten in seine Sperrstellung umklappbar am Rastschieber gelagert ist und daß der Sicherungs anschlag am hinteren Ende des Schlitzes vorgesehen ist.

Die Erfindung wird im folgenden beispielsweise anhand der Zeichnung näher erläutert. In der Zeichnung zeigt:

Fig. 1 einen Längsschnitt durch den Verbindungsbereich des äußeren und des inneren Holmstücks mit einem ersten Ausführungsbeispiel einer Rastvorrichtung,

Fig. 2 einen Querschnitt im wesentlichen nach Linie II-II in Fig. I,

Fig. 3 eine teilweise Seitenansicht des in Fig. 1 geschnitten dargestellten Verbindungsbereichs,

Fig. 4 eine perspektivische Darstellung eines zweiten Ausführungsbeispiels einer Rastvorrichtung in auseinandergezogener Darstellung,

Fig. 5a eine schematische Vorderansicht einer Muffe der Rastvorrichtung nach Fig. 4,

Fig. 5b eine rein schematische Rückansicht einer Hülse der Rastvorrichtung nach Fig. 4,

Fig. 6 einen Längsschnitt durch die Rastvorrichtung nach Fig. 4 im zusammengesetzten Zustand,

Fig. 7 einen Längsschnitt durch den Verbindungsbereich des äußeren und inneren Holmstücks mit einem dritten Ausführungsbeispiel einer Rastvorrichtung,

Fig. 8 eine Draufsicht auf die Vorrichtung nach Fig. 7 und

Fig. 9 einen Längsschnitt entsprechend Fig. 7 mit einer Abwandlung der dritten Ausführungsform der Rastvorrichtung.

In den verschiedenen Figuren der Zeichnung werden einander entsprechende Bauteile mit gleichen Bezugszeichen bezeichnet.

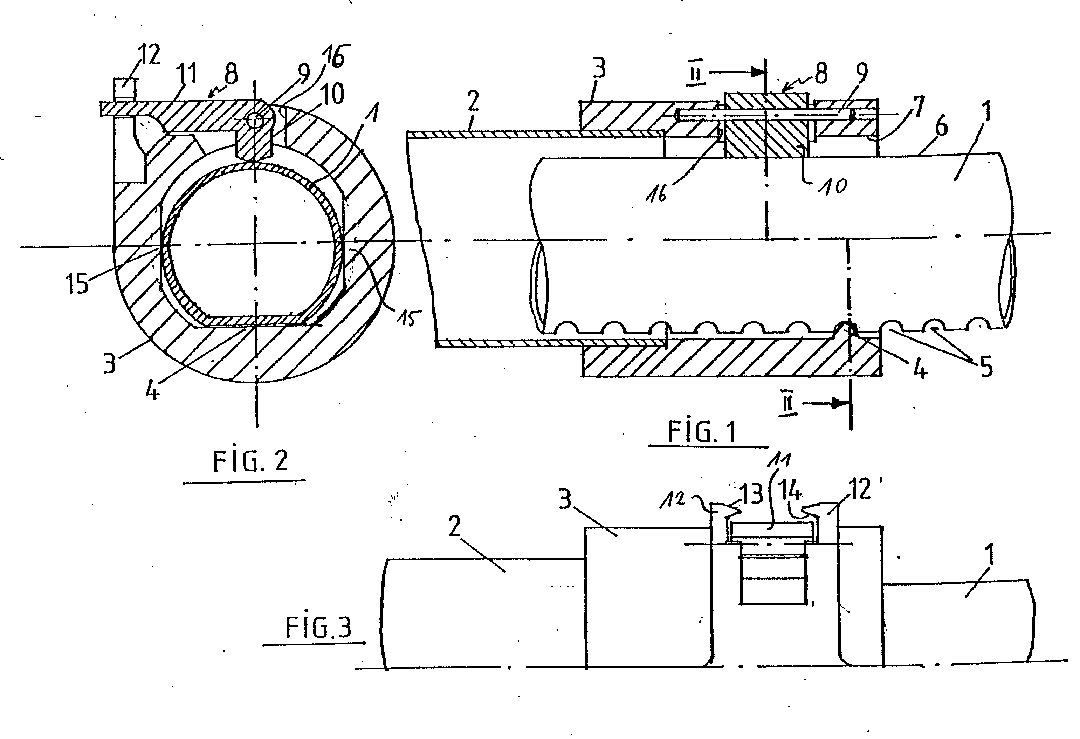

Nach Fig. 1 ist ein Holmstück 1 eines nicht näher dargestellten hinteren Gabelbaumteils in einen freien En― ―bschnitt eines Holmstücks 2 eingesteckt, das vorzugsweise zum ebenfalls nicht näher dargestellten vorderen Gabelbaumteil gehört und dessen Innendurchmesser wesentlich größer ist, als der Außendurchmesser des inneren Holmstücks, so daß die beiden Holmstücke I, 2 mit beträchtlichem Spiel ineinandergeführt sind. Am freien Endabschnitt des äußeren Holmstücks 2 ist außen eine Muffe 3 befestigt, deren Innendurchmesser im wesentlichen dem Innendurchmesser des äußeren Holmstücks 2 entspricht, so daß die Innenoberfläche 7 der Muffe 3 im wesentlichen mit der Innenoberfläche des Holmstücks 2 fluchtend ausgerichtet ist.

Wie in Fig. 1 und 2 unten dargestellt, ist an der Innenwand der Muffe 3 ein als Rastelement dienender Raststeg 4 angebracht. An dem unteren, dem Raststeg 4 gegenüberliegenden Umfangsbereich des ersten Holmstücks 1 sind eine Vielzahl von Rastsicken 5 eingedrückt, deren Querschnittsform komplementär zur Querschnittsform des Raststegs 4 ist, so daß der Raststeg 4 entsprechend einer ausgewählten Längsstellung des inneren Holmstücks 1 relativ zum äußeren Holmstück 2 in eine dieser Rastsicken 5 formschlüssig eingreifen kann.

Diametral gegenüberliegend zum Raststeg 4 ist an der Muffe 3 ein Sperrhebel 8 mittels einer sich in Längsrichtung der Muffe 3 erstreckenden Achse 9 angelenkt, der sich mit einem als Sperrglied dienenden Sperrarm 10 durch eine Öffnung 16 in der Muffe 3 hindurch in deren Innenbereich hineinerstreckt.

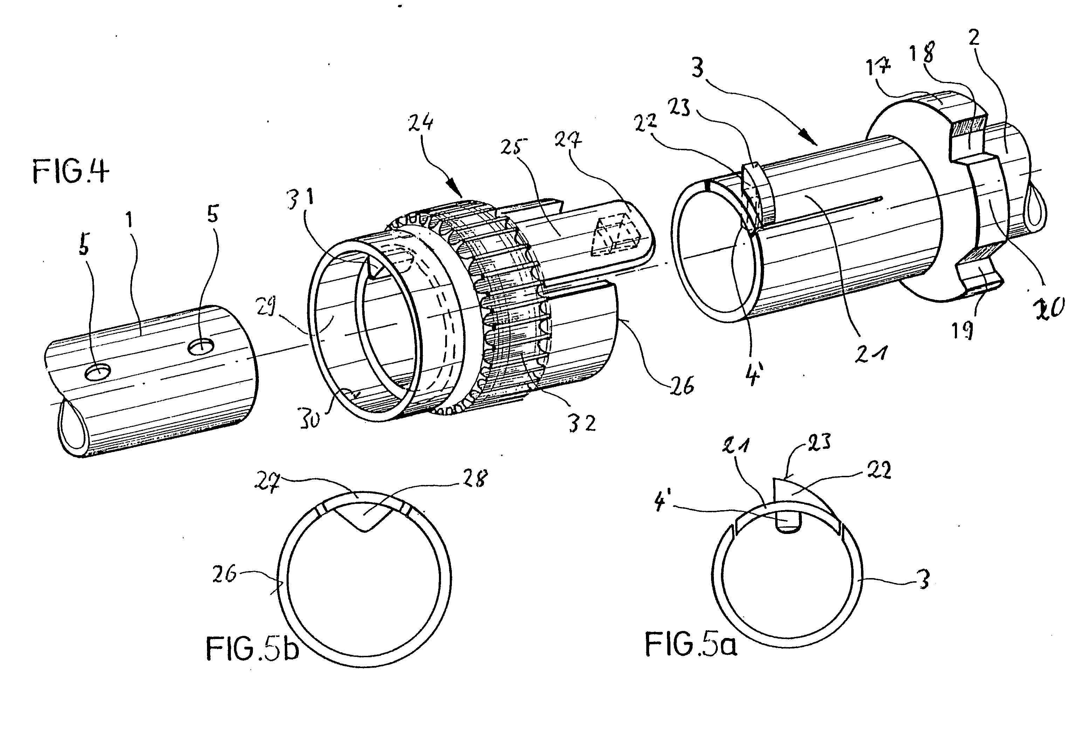

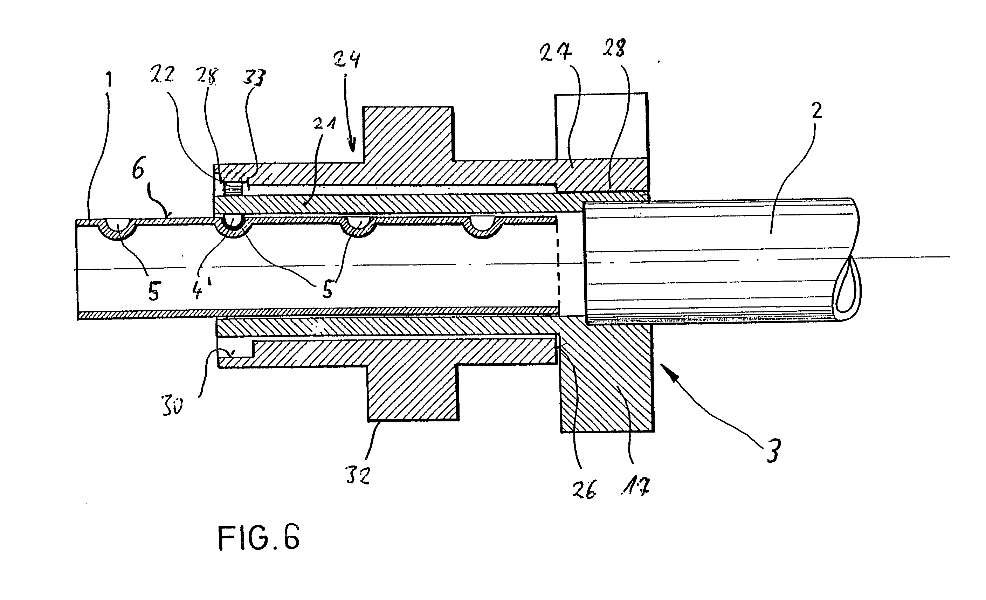

Der Sperrhebel 8 weist einen sich im wesentlich rechtwinklig zum Sperrarm 10 erstreckenden Betätigungsarm 11 auf, der in der Sperrstellung des Sperrhebels 8, wie in Fig. 3 gezeigt, zwischen zwei Federarmen 12 angeordnet ist, die an ihren freien Enden einander zugewandte, abgewinkelte Endabschnitte mit schrägen Auflaufflächen 13, 14 aufweisen, die ein leichtes Ein- und Austreten des Betätigungsarmes 11 zwischen die Federarme 12 und aus diesen heraus beim Schwenken des Sperrhebels 8 zulassen. Gleichzeitig wird der Sperrhebel 8 durch die mit seinem Betätigungsarm in Eingriff stehenden abgewinkelten Endabschnitte in seiner Sperrstellung sichergehalten.

Wie aus Fig. 2 zu ersehen ist, weist die Muffe 3 im Bereich des Sperrhebels 8 bzw. des Raststegs 4 nach innen vorstehende seitenabschnitte 15 auf, wodurch eine Seitenführung des inneren Holmstücks 1 in der Muffe 3 bewirkt wird. Die Seitenabschnitte 15 können dabei in nicht näher dargestellter Weise eben ausgeführt sein, so daß zwischen den Seitenabschnitten 15 und dem inneren Holm 1 eine linienförmige Berührungsstelle besteht. Es ist jedoch auch möglich, die Seitenabschnitte 15 ballig auszubilden, so daß nur eine im wesentlichen punktförmige Berührungsfläche zwischen den Seitenabschnitten 15 und dem inneren Holmstück 1 besteht.

Um einen erfindungsgemäßen Gabelbaum in seiner Länge zu verstellen, werden zunächst die an beiden Holmen vorgesehenen Sperrhebel 8 mittels ihres Betätigungsarms 11 in ihre Freigabestellung verschwenkt, wobei der Sperrarm 10 des Sperrhebels 8 aus dem Zwischenraum zwischen der inneren Oberfläche der Muffe 7 und der äußeren Oberfläche des inneren Holmstücks 1 herausgeschwenkt wird. Nun kann das innere Holmstück 1 gegen die innere Oberfläche 7 der Muffe 3 in Anlage gebracht werden, so daß der Raststeg 4 außer Eingriff mit dem Rastsicken 5 gelangt. Da der freie Abstand zwischen der inneren Oberfläche 7 der Muffe 3 und der äußeren Oberfläche 6 der Muffe 1 im verriegelten Zustand etwas größer ist, als die Eingriffstiefe des Raststegs 4 in eine der Rastsikken 5 können nun die inneren Holmstücke der Holme des Gabelbaums frei gegenüber den äußeren Holmstücken 2 verschoben werden bis die gewünschte Länge des Gabelbaums eingestellt ist.

Anschließend rastet der Raststeg 4 in eine ausgewählte Rastsicke 5 ein, so daß nachfolgend der Sperrhebel 8 in seine Sperrstellung verschwenkt werden kann, in der der Sperrarm 10 in den Innenraum der Muffe 3 eintritt und das freie Spiel zwischen der Muffe 3 und dem inneren Holmstück 1 aufhebt. Dabei verrastet gleichzeitig der Betätigungsarm 11 des Sperrhebels 8 mit den Federarmen 12, so daß der Sperrhebel 8 in seiner Sperrstellung gehalten wird. Jetzt ist die gewünschte Länge des Gabelbaums eingestellt, wobei die beiden Holmstücke 1 und 2 in Axialrichtung gegeneinander verriegelt sind.

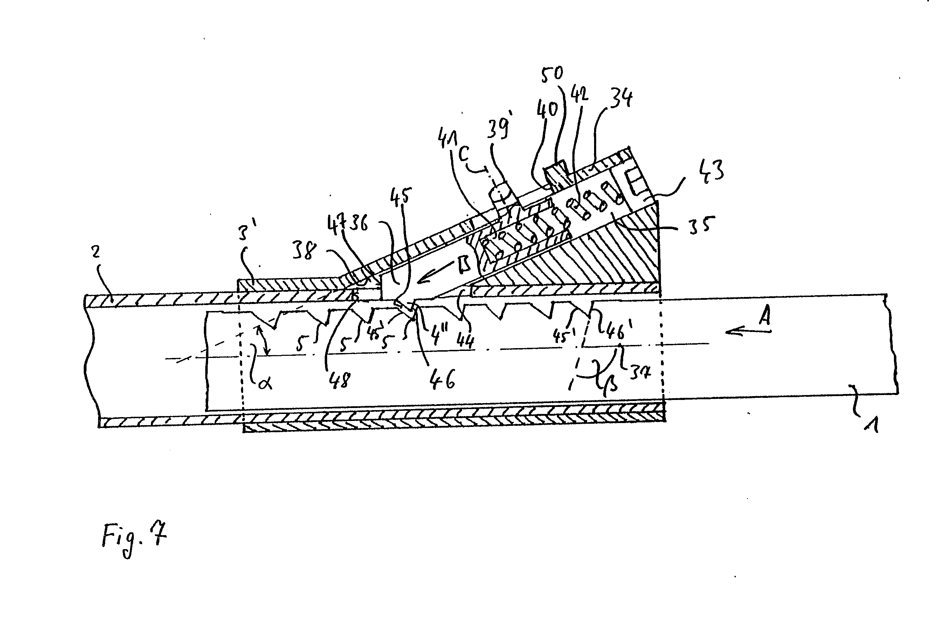

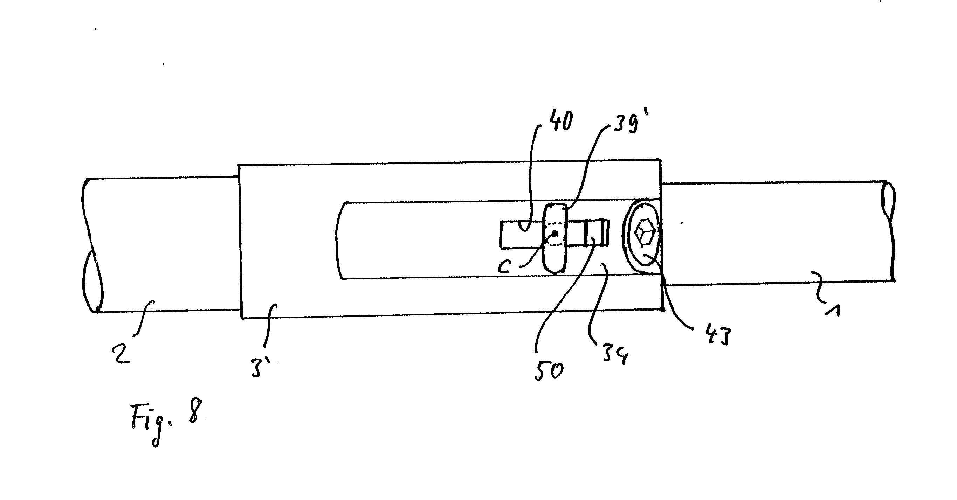

In Fig. 4 ist links der freie Endabschnitt eines Holmstücks 1 dargestellt, an dem einzelne zu einander beabstandete Rastsicken 5 vorgesehen sind, die im wesentlichen halbkugelförmig ausgebildet sind. Auf der rechten Seite der Fig. 4 ist ein äußeres Holmstück 2 des vorzugsweise vorderen Gabelbaumteils dargestellt, auf das eine Muffe 3 aufgesetzt und daran in üblicher Weise befestigt ist. Die Muffe 3 besitzt an ihrem dem Holmstück 2 zugewandten Ende einen sich radial nach außen erstreckenden Flansch 17 der eine erste und eine zweite Rastvertiefung 18 bzw. 19 aufweist, wobei der Flansch 17 zwischen den Rastvertiefungen 18, 19 einen Abschnitt 20 aufweist, der einen verringerten Durchmesser besitzt. An ihrem freien Ende besitzt die Muffe 3 eine freigeschnittene Federzunge 21, die sich axial zur Muffe erstreckt und die federnd radial nach innen und außen bewegbar ist. Benachbart zu ihrem freien Ende besitzt die Federzunge 21 auf ihrer Innenseite einen Raststift 4′, der ein im wesentlichen halbkugelförmiges freies Ende aufweist. Gegenüber dem Raststift 4′ ist auf der Außenseite der Federzunge 21 ein in Umfangsrichtung der Muffe 3 keilförmig ausgebildeter Vorsprung 22 mit einer Nockenfläche 23 angeordnet, dessen größte radiale Erstreckung sich im Bereich des Raststiftes 4 befindet, wie insbesondere in Fig. 5a zu erkennen ist.

Eine auf die Muffe 3 aufsteckbare Hülse 24 besitzt an ihrem einen, dem Flansch 17 der Muffe 3 zugeordneten Ende eine freigeschnittene Federzunge 25, die sich in Längsrichtung der Hülse 24 erstreckt und die axial über die entsprechende Stirnfläche 26 der Hülse 24 mit einem Endabschnitt 27 vorsteht. Auf der Innenseite des freien Endabschnitts 27 der Federzunge 25 ist eine in etwa dreieckförmige Rastnase 28 befestigt, die im wesentlichen entsprechend den Rastvertiefungen 18, 19 im Flansch 17 der Muffe 3 ausgebildet und diesen zugeordnet ist.

An ihrem von der Federzunge 25 abgewandten Ende besitzt die Hülse 24 einen Abschnitt 29 mit vergrößertem Innendurchmesser an dessen Innenoberfläche 30 ein Sperrnokken 31 befestigt ist. Um eine gute Handhabung beim Verdrehen der auf die Muffe 3 aufgesetzten Hülse 24 zu ermöglichen, ist sie auf ihrer Außenseite mit einem geriffelten Griffabschnitt 32 versehen.

Zum Aufsetzen der Hülse 24 auf die Muffe 3 wird die Hülse 24 zunächst so mit der Muffe 3 ausgerichtet, daß die die Rastnase 28 tragende Federzunge 25 axial mit der die Freigabestellung der Hülse 24 festlegenden Rastvertiefung 19 im Flansch 17 der Muffe 3 ausgerichtet ist. Nun wird die den Raststift 4′ bzw. den Vorsprung 22 tragende Federzunge 21 der Muffe 3 nach innen gedrückt, so daß die Hülse 24 soweit auf die Muffe 3 aufgesteckt werden kann, bis ihre dem Flansch 17 zugeordnete Stirnfläche 26 an diesen anstößt. Jetzt kann sich die Federzunge 21 der Muffe 3 wieder in ihre Ruhelage zurückbewegen, so daß der Vorsprung 22 der Federzunge 21 im Abschnitt 29 mit vergrößertem Innendurchmesser der Hülse 24 angeordnet ist. Dabei sichert der keilförmige Vorsprung 22, der hinter die den Abschnitt 29 begrenzende Schulter 33 greift die Hülse 24 gegen ein Abrutschen von der Muffe 3.

Jetzt kann das innere Holmstück 1, dessen Außendurchmesser deutlich kleiner ist, als der Innendurchmesser der Muffe 3 bzw. des äußeren Holmstücks 2, in die Muffe 3 und das Holmstück 2 eingeschoben werden. Dabei ist das Holmstück 1 in Umfangsrichtung so mit der Muffe 3 ausgerichtet, daß die Rastsicken 5 mit dem Raststift 4′ zusammenwirken können. Da die axiale Länge des Raststiftes 4′ etwas größer ist, als die Durchmesserdifferenz zwischen dem Holmstück 1 und der Muffe 3 wird beim Einstecken des Holmstücks 1 in die Muffe 3 die den Raststift 4′ tragende Federzunge 21 federnd nach außen gebogen, so lange der Raststift 4′ mit seinem halbkugelförmigen Ende auf der äußeren Oberfläche 6 des Holmstücks 1 aufliegt. Gelangt nun beim Einstecken des Holmstücks 1 der Raststift 4′ in Ausrichtung mit einer Rastsicke 5, so rastet er teilweise in die Rastsicke 5 ein. Hierdurch wird eine Vorverrastung zwischen den Holmstücken 1 und 2 bzw. der Muffe 3 und dem Holmstück 1 bewirkt, die jedoch keine axial feste Verriegelung der Holmstücke 1 und 2 ermöglicht. Somit läßt sich das Holmstück 1 in die gewünschte axiale Lage gegenüber dem Holmstück 2 schieben. Ist die gewünschte Lage - schließlich erreicht, so braucht die Hülse 24 nur noch aus ihrer Freigabestellung in ihre Sperrstellung verdreht werden.

Bei dieser Drehung der Hülse 24 auf der Muffe 3 läuft der Sperrnocken 31 auf der Nockenfläche 23 des Vorsprungs 22 auf und drückt damit die Federzunge 21 radial nach innen, so daß der Raststift 4′ vollständig in die entsprechende Rastsicke 5 eingreift. Gleichzeitig wird bei dieser radial nach innen gerichteten Bewegung der Federzunge 21 das innere Holmstück 1 gegen die Innenfläche der Muffe 3 auf der dem Raststift 4′ gegenüberliegenden Seite gedrückt, wodurch das freie, der Durchmesserdifferenz von Holmstück 1 und Muffe 3 entsprechende Spiel des Holmstücks 1 in der Muffe 3 aufgehoben wird. Gleichzeitig rastet die Rastnase 28 an der Federzunge 25 der Hülse 24 in die die Sperrstellung festlegende Rastvertiefung 18 am Flansch 17 ein, wodurch die Sperrstellung der Hülse 24 auf der Muffe 3 gegen ein unbeabsichtigtes Verdrehen gesichert ist.

Jetzt sind die beiden Holmstücke 1 und 2 durch den Formschluß zwischen dem Raststift 4' und der entsprechenden Rastsicke 5 axial fest gegen ein Verschieben gesichert und der Gabelbaum ist auf seine gewünschte Länge eingestellt.

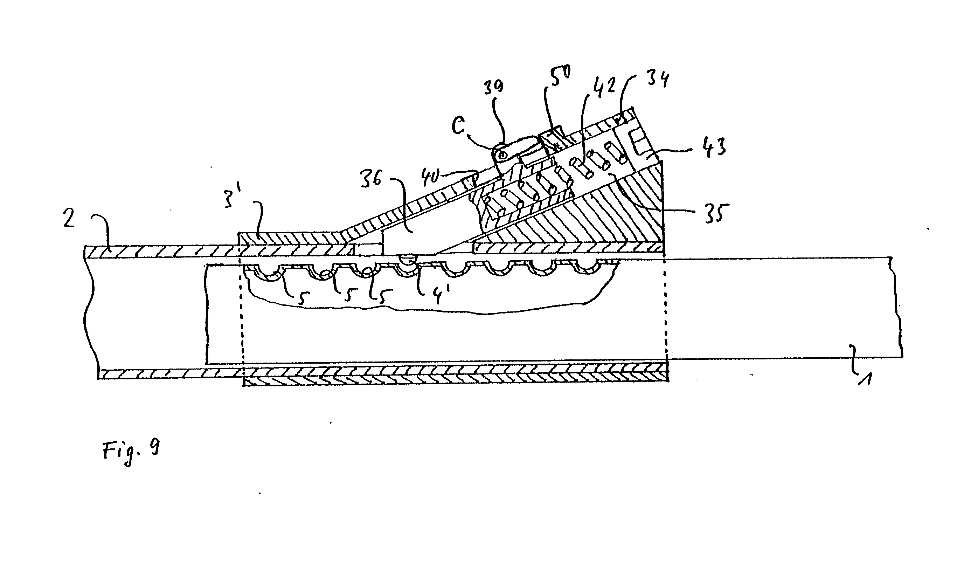

In Fig. 7 ist ein drittes Ausführungsbeispiel der Erfindung dargestellt, bei dem in ein äußeres Holmstück 2 ein inneres Holmstück 1 eingesteckt ist, dessen Außendurchmesser deutlich kleiner ist, als der Innendurchmesser des äußeren Holmstücks 2. Auf den Endabschnitt des äußeren Holmstücks 2 ist eine Hülse 3' aufgesteckt und befestigt, die ein Gehäuse 34 aufweist. In dem Gehäuse 34 ist ein Führungskanal 35 für einen Rastschieber 36 vorgesehen. Der Führungskanal 35, der unter einem spitzen Winkel α zur Längsachse 37 der Hülse 3' verläuft, besitzt auf seiner in Fig. 7 oberen Seite eine Laufbahn 38 für den Rastschieber 36.

Der im Führungskanal 35 angeordnete Rastschieber 36 trägt einen Betätigungszapfen 39, der durch einen Schlitz 40 nach außen aus dem Gehäuse 34 vorsteht, um eine manuelle Verschiebung des Rastschiebers zu ermöglichen. Im hinteren Abschnitt des Rastschiebers 36 ist eine Bohrung 41 vorgesehen, in die eine Schraubendruckfeder 42 eingesetzt ist, die sich wiederum an einem den Führungskanal 35 abschließenden und beispielsweise in diesen eingeschraubtes Federwiderlager 43 abstützt, um den Rastschieber 36 in Richtung auf die Längsachse 37 der Hülse vorzuspannen.

Am vorderen Abschnitt des Rastschiebers 36, der durch die Mündung des Führungskanals 35 und durch eine dieser Mündung gegenüberliegende Fensteröffnung 44 in den Innenraum des äußeren Holmstücks 2 eintreten kann, ist ein Rastzahn 4'' vorgesehen, der mit entsprechend geformten Rastsicken 5 am inneren Holmstück 1 zusammenwirkt. Zusätzlich ist erfindungsgemäß die an das innere Holmstück 1 andrückbare Fläche des Rastschiebers 36 hohlzylindrisch entsprechend dem Durchmesser des inneren Holmstücks ausgebildet, um beim Andrücken einen guten Formschluß zu bewirken, der eine gute und sichere Halterung des inneren Holmstücks gewährleistet.

Der Rastzahn 4'' besitzt eine vordere Flanke 45, die ebenso wie die vorderen Flanken 45' der Rastsicken 5 einen flachen Winkel mit der Längs-Schieberichtung des inneren Holmstücks 1 einschließt. Eine hintere Flanke 46 des Rastzahns 4''-schließt mit der Schieberichtung des Holmstücks 1 ebenso wie eine hintere Flanke der Rastsicken 5 einen relativ steilen Winkel β ein.

Schließlich ist am vorderen Ende des Rastschiebers 36 noch eine Anschlagfläche 47 vorgesehen, die mit einer Anschlagkante 48 der Fensteröffnung 44 im äußeren Holmstück 4 zusammenwirkt.

Anstelle eines Rastzahns 4'' kann am Rastschieber 36 auch ein Raststift 4' (Fig. 9) vorgesehen sein, der einen kurzen zylindrischen Abschnitt und einen daran anschließenden im wesentlichen halbkugelförmigen Abschnitt aufweist. Für einen derartigen Raststift 4' müssen die Rastsicken 5 dann entsprechend halbkugelförmig ausgebildet werden. Hierbei ist es möglich, daß die vordere halbkugelförmige Fläche des Raststiftes 4' einen kleineren Krümmungsradius aufweist als seine hintere ebenfalls halbkugelförmig ausgebildete Fläche besitzt.

Im folgenden wird die Funktionsweise der Rastvorrichtungen nach Fig. 7 und 9, die einander entsprechen, anhand des Ausführungsbeispiels nach Fig. 7 beispielsweise beschrieben.

Um das innere Holmstück 1 in das äußere Holmstück 2 einzuschieben, wird der Rastschieber 36 mittels des Betätigungszapfens 39 gegen die Kraft der Schraubendruckfeder 42 zurückgezogen, so daß der Rastzahn 4'' außer Eingriff mit den Rastsicken 5 des inneren Holmstücks 1 gerät. Nun kann das innere Holmstück 1 frei in das äußere Holmstück 2 eingesteckt werden. Befindet sich das innere Holmstück 1 relativ zum äußeren Holmstück 2 in der gewünschten Lage, so wird der Betätigungszapfen 39 des Rastschiebers 36 losgelassen, so daß die Schraubendruckfeder 42 den Rastschieber 36 nach vorne und innen schiebt, wobei der Rastzahn 4'' in eine der Rastsicken 5 eingreift.

Wirkt nun auf das innere Holmstück 1 eine Kraft in Richtung des Pfeils A in Fig. 7, so wird der Rastzahn 4'' weiter in Richtung des Pfeils B nach innen und vorne verschoben, da die auf das innere Holmstück 1 wirkende Kraft über die hintere Flanke 46' der entsprechenden Sicke 5 auf die hintere Flanke 46 des Rastzahns übertragen wird. Dabei drückt der Rastschieber den Rastzahn 4'' noch fester in die Rastsicke 5 und gleichzeitig drückt er das innere Holmstück 1 gegen die der Fensteröffnung 44 im äußeren Holmstück 2 gegenüberliegenden Innenseite des äußeren Holmstücks 2. Das innere Holmstück 1 und das äußere Holmstück 2 sind somit gegen ein Verschieben in Richtung des Pfeils A fest miteinander verriegelt. Gleichzeitig ist auch das Spiel zwischen den Holmstücken aufgehoben.

Um eine übermäßige Druckbelastung des inneren Holmstücks 1 durch den Rastschieber 36 zu verhindern, ist die Anschlagkante 48 gegen die die Anschlagfläche 47 des Rastschiebers 36 vorgesehen, um eine weitere Verschiebung des Rastschiebers 36 zu verhindern, wenn der endgültige Anpreßdruck für das innere Holmstück 1 gegen das äußere Holmstück 2 erreicht ist und die beiden Holmstücke die erwünschte Rohr zu Rohr-Anlage erreicht haben.

Soll umgekehrt das innere Holmstück 1 aus dem äußeren Holmstück 2 herausgezogen werden, um den Gabelbaum zu verlängern, so wird der Rastschieber 36 entgegen dem Pfeil B von der vorderen Flanke 45' der entsprechenden Rastsicke 5 nach hinten und oben geschoben, so daß sich das innere Holmstück 1 ratschend aus dem äußeren Holmstück 2 herausziehen läßt, ohne daß es erforderlich wäre, den Rastschieber 36 manuell mittels des Betätigungszapfens 39 zurückzuziehen.

Die Federkraft der Schraubendruckfeder 42 wird so gewählt, daß sie ausreicht, um den Rastschieber 36 nach vorne und innen zu verschieben, so daß er das freie Spiel zwischen den Holmstücken 1 und 2 aufheben kann und gleichzeitig den Rastzahn 4" genügend fest in Eingriff mit der entsprechenden Rastsicke 5 hält.

Aus dieser Beschreibung ergibt sich, daß die auf das innere Holmstück 1 wirkende Einschiebekraft dazu benutzt wird, um sowohl den Rastzahn 4" weiter in die Rastsicke 5 zu pressen und gleichzeitig das innere Holmstück 1 gegen das äußere Holmstück 2 zu drücken. Gleichzeitig wird jedoch ein Herausziehen des inneren Holmstücks 1 aus dem äußeren Holmstück 2 praktisch nicht behindert, da die Ausziehkraft in entsprechender Weise zum Lösen der Verrastung genutzt wird, indem sie den Rastschieber 36 zurückschiebt.

Wie aus den Fig. 7 und 8 ferner zu entnehmen ist, ist der Betätigungszapfen als T-förmiger Betätigungsknebel 39' ausgebildet, der um eine senkrecht auf dem Rastschieber 36 stehende Achse C drehbar an diesem befestigt ist. Ferner ist am Ende des Schlitzes 40 ein nach oben vorstehender Sicherungsanschlag 50 vorgesehen, gegen den sich der Betätigugnsknebel 39' abstützt, wenn er aus seiner in Fig. 7 und 8 dargestellten Freigabestellung um die Achse C um 90° in seine Sperrstellung gedreht ist. Sobald der Betätigungsknebel 39' mit seinem oberen Abschnitt am Sicherungsanschlag 50 anliegt, ist der Betätigungsknebel 39' und damit der Rastschieber 36 gegen ein Verschieben entgegen der Kraft der Feder 42 gesichert.

Zum Lösen der Verrastung des inneren Holmstücks 1 mit dem äußeren Holmstück 2 braucht der Betätigungsknebel dann wiederum nur um 90° zurück in seine Freigabestellung gedreht werden, so daß der Rastschieber 36 mit dem Betätigungsknebel 39' leicht entgegen der Verschieberichtung B zurückgezogen werden kann.

Nach Fig. 9 ist der Betätigungszapfen 39 um eine quer zum Rastschieber 36 verlaufende Achse C' klappbar ausgebildet. Sobald der Rastschieber 36 aus der in Fig. 9 dargestellten teilweise zurückgezogenen Stellung nach vorne verschoben ist und sich in seiner Raststellung befindet, kann der Betätigungszapfen 39 nach unten umgeklappt werden, so daß er hinter den Sicherungsanschlag 50 am Ende des Schlitzes 40 greift und damit den Rastschieber 36 an einem Verschieben nach rückwärts hindert.

## Ansprüche

1. Längenverstellbarer Gabelbaum, mit einem vorderen und einem hinteren Gabelbaumteil, bei dem freie Endabschnitte der Holmstücke (1) vorzugsweise des hinteren Gabelbaumteils mit beträchtlichem Spiel in rohrförmige Holmstücke (2) des vorderen Gabelbaumteils eingesteckt sind und mit jeweils die ineinandergesteckten Holmstücke (1, 2) des vorderen und des hinteren Gabelbaumteils formschlüssig miteinander in einer ausgewählten Einschublänge verbindenden Rastvorrichtungen (4, 5; 4', 5; 4", 5) mit ersten und zweiten Rastelementen (4, 4', 4" bzw. 5), wobei die ersten Rastelemente (4, 4', 4") an den Holmstücken (2) des vorderen und die zweiten Rastelemente (5) an den Holmstücken (1) des hinteren Gabelbaumteils angeordnet sind,
dadurch **gekennzeichnet,**
daß die Außenabmessungen der die einen Rastelemente (5) tragenden Abschnitte der inneren Holmstücke (1) beträchtlich kleiner als die Innenabmessungen der die anderen Rastelemente (4), 4', 4") tragenden Abschnitte von mit den äußeren Holmstücke (2) verbundenen Muffen (3, 3') oder der äußeren Holmstücke (2) sind, und daß jede Rastvorrichtung ein eine Freigabestellung und eine Sperrstellung aufweisendes Sperrglied (10, 28, 36) umfaßt, das in seiner Sperrstellung das freie Spiel zwischen die Rastelemente (4, 4', 4", 5) tragenden Abschnitten aufhebt, wobei die Holmstücke (1, 2) in axialer Richtung verriegelt sind.

2. Längenverstellbarer Gabelbaum nach Anspruch 1,
dadurch **gekennzeichnet,**
daß in die inneren Holmstücke (1) eine Vielzahl von axial voneinander beabstandeten Rastsicken (5) als erste Rastelemente eingedrückt sind und daß die komplementär zu den ersten Rastelementen ausgebildeten zweiten Rastelemente als mit dem äußeren Holmstükken (2) verbundene Rastvorsprünge (4, 4', 4") ausgebildet sind.

3. Längenverstellbarer Gabelbaum nach Anspruch 1 oder 2, dadurch **gekennzeichnet,**
daß die Rastvorsprünge (4, 4', 4") an fest mit den äußeren Holmstücken (2) verbundenen Muffen (3, 3') angeordnet sind.

4. Längenverstellbarer Gabelbaum nach Anspruch I, 2 oder 3,
dadurch **gekennzeichnet,**
daß die Rastvorsprünge als quer zur Längsrichtung der Holmstücke (1, 2) verlaufende Raststege (4) ausgebildet sind, die starr an den äußeren Holmstücken (2) befestigt sind und daß die Höhe der Raststege (4) etwas kleiner als das freie Spiel zwischen den inneren Holmstücken (1) und den die Raststege (4) tragenden, den äußeren Holmstücken (2) zugeordneten Abschnitten ist.

5. Längenverstellbarer Gabelbaum nach Anspruch 1 bis 4, dadurch **gekennzeichnet,** daß die Sperrglieder (10) jeweils in ihrer Sperrstellung den zugeordneten Rastelementen (4, 5) diametral gegenüberliegend angeordnet sind.

6. Längenverstellbarer Gabelbaum nach einem der vorhergehenden Ansprüche, dadurch **gekennzeichnet,** daß das jeweilige Sperrglied als Sperrarm (10) eines Winkelhebels (8) ausgebildet ist, der schwenkbar auf einer am äußeren Holmstück (2) befestigten Achse (9) gelagert ist, wobei der Sperrarm (10) in seiner Sperrstellung soweit in das innere des äußeren Holmstücks (2) oder der Muffe (3) ragt, daß der Rastvorsprung (4) in einer ausgewählten Rastvertiefung (5) verriegelt ist.

7. Längenverstellbarer Gabelbaum nach Anspruch 6, dadurch **gekennzeichnet,** daß die den jeweiligen Winkelhebel (8) tragende Achse (9) zur Holmlängsrichtung parallel angeordnet ist.

8. Längenverstellbarer Gabelbaum nach Anspruch 6, dadurch **gekennzeichnet,** daß die den jeweiligen Winkelhebel (8) tragende Achse (9) quer zur Holmlängsrichtung angeordnet ist, daß die mit dem inneren Holmstück (1) in Eingriff bringbare Fläche des Sperrarms (10) komplementär zur Außenfläche des inneren Holmstücks (1) ausgebildet ist und daß der Sperrarm (10) in seiner Sperrstellung das innere Holmstück (1) teilweise seitlich umfaßt.

9. Längenverstellbarer Gabelbaum nach einem der vorhergehenden Ansprüche, dadurch **gekennzeichnet,** daß das äußere Holmstück (2) oder die Muffe (3) im Bereich der Rastelemente (4, 5) eine derartige Querschnittsform aufweist, daß das innere Holmstück (1) nur in der durch die Rastelemente (4, 5) und das Sperrglied (10) gegebenen Ebene Spiel hat.

10. Längenverstellbarer Gabelbaum nach Anspruch l, 2 oder 3, dadurch **gekennzeichnet,** daß der jeweilige Rastvorsprung als Raststift (4') an einer freigeschnittenen Federzunge (21) angeordnet ist, die am äußeren Holmstück (2) oder an einer mit dem äußeren Holmstück (2) fest verbundenen Muffe (3) vorgesehen ist, und daß das Sperrglied (28) in seiner Sperrstellung die Federzunge (21) in das Innere des äußeren Holmstücks (2) oder der Muffe (3) hineindrückt.

11. Längenverstellbarer Gabelbaum nach Anspruch 10, dadurch **gekennzeichnet,** daß das Sperrglied als Sperrnocken (28) an der Innenoberfläche einer auf das äußere Holmstück (2) oder die Muffe (3) aufgesteckten Hülse (24) ausgebildet ist, wobei der Sperrnocken (28) mit einem keilförmigen Vorsprung (22) mit Nockenfläche (23) zusammenwirkt, der im Bereich des Raststiftes (4') auf der Außenseite der Federzunge (21) vorgesehen ist.

12. Längenverstellbarer Gabelbaum nach Anspruch 11, dadurch **gekennzeichnet,** daß die Hülse (24) drehbar oder axial verschiebbar auf dem äußeren Holmstück (2) oder der Muffe (3) angeordnet ist, so daß der Sperrnocken (28) zwischen seiner Freigabe- und seiner Sperrstellung hin- und herbewegbar ist.

13. Längenverstellbarer Gabelbaum nach einem der Ansprüche 10 bis 12, dadurch **gekennzeichnet,** daß der Raststift (4') eine Länge aufweist, die etwas größer als das freie Spiel zwischen dem inneren Holmstück (1) und dem äußeren Holmstück (2) oder der Muffe (3) ist, so daß der Raststift (4') bei in seiner Freigabestellung befindlichem Sperrglied (28) und in ihrer Neutralstellung befindlichen Federzunge (21) teilweise in eine der Rastsicken (5) am inneren Holmstück (1) eingreift, und daß die Federzunge (21) soweit nach außen ausfederbar ist, daß der Raststift (4') außer Eingriff mit der Rastsicken (5) bringbar ist.

14. Längenverstellbarer Gabelbaum nach Anspruch 10 bis 13, dadurch **gekennzeichnet,** daß die den Sperrnocken (31) tragende Hülse (24) im Bereich des Sperrnockens (31) einen Abschnitt mit vergrößertem Durchmesser aufweist, der durch eine ringförmige Schulter (33) begrenzt ist, hinter die der keilförmige Vorsprung (22) mit geringem axialen Spiel greift.

15. Längenverstellbarer Gabelbaum nach Anspruch 10 bis 14, dadurch **gekennzeichnet,** daß umfangsmäßig verteilt zwei oder mehr mit Raststiften (4') versehene Federzungen (21) am äußeren Holmstück (2) oder der Muffe (3) angeordnet sind, wobei jedem Raststift (4') entsprechende Rastsicken (5) und Sperrnocken (31) zugeordnet sind.

16. Längenverstellbarer Gabelbaum nach einem der vorhergehenden Ansprüche, dadurch **gekennzeichnet,** daß die jeweiligen Sperrglieder (10, 31) zumindest in ihrer Sperrstellung verrastbar sind.

17. Längenverstellbarer Gabelbaum nach Anspruch 1 bis 3, dadurch **gekennzeichnet,** daß der Rastvorsprung (4'') am Sperrglied (36) vorgesehen ist, daß als in Richtung auf seine Sperrstellung federbeaufschlagter Sperrschieber (36) ausgebildet ist, der gleitend verschiebbar am äußeren Holmstück (2) angeordnet ist.

18. Längenverstellbarer Gabelbaum nach Anspruch 17,
dadurch **gekennzeichnet,**
daß die Verschieberichtung (B) des Sperrschiebers (36) mit der Einsteckrichtung (A) des inneren Holmstücks (1) in das äußere Holmstück (2) einen spitzen Winkel ($\alpha$) einschließt.

19. Längenverstellbarer Gabelbaum nach Anspruch 18,
dadurch **gekennzeichnet,**
daß der Winkel ($\alpha$) im Bereich zwischen 5° und 50°, vorzugsweise zwischen 15° und 35° und insbesondere zwischen 20° und 25° liegt.

20. Längenverstellbarer Gabelbaum nach Anspruch 17 bis 19, dadurch **gekennzeichnet,**
daß der Rastvorsprung als Rastzahn (4″) ausgebildet ist, dessen in Einsteckrichtung (A) des inneren Holmstücks (1) vordere Flanke (45) einen vorzugsweise flacheren Winkel mit der Einsteckrichtung (A) einschließt als seine hintere Flanke (46).

21. Längenverstellbarer Gabelbaum nach Anspruch 20,
dadurch **gekennzeichnet,**
daß der Winkel ($\beta$), den die hintere Flanke (46) des Sperrzahns der Einsteckrichtung (A) des inneren Holmstücks (1) einschließt im Bereich zwischen 45° und 135°, vorzugsweise zwischen 70° und 110° und insbesondere bei 90° liegt.

22. Längenverstellbarer Gabelbaum nach Anspruch 17 bis 19, dadurch **gekennzeichnet,**
daß der Rastvorsprung als Raststift (4′) ausgebildet ist.

23. Längenverstellbarer Gabelbaum nach Anspruch 22,
dadurch **gekennzeichnet,**
daß das freie Ende des zylindrischen Raststiftes (4′) halbkugelförmig ausgebildet ist.

24. Längenverstellbarer Gabelbaum nach Anspruch 22,
dadurch **gekennzeichnet,**
daß das freie Ende des zylindrischen Raststiftes (4′) auf der in Einsteckrichtung (A) des inneren Holmstücks (1) vorderen seite einen in etwa viertelkugelförmigen Abschnitt aufweist, dessen Krümmungsradius größer ist als der eines entsprechenden viertelkugelförmigen Abschnitts auf der hinteren Seite des Raststiftes (4′).

25. Längenverstellbarer Gabelbaum nach Anspruch 17 bis 24, dadurch **gekennzeichnet,**
daß am Rastschieber (36) eine Anschlagfläche (47) vorgesehen ist, die mit einer am äußeren Holmstück (2) vorgesehenen Anschlagkante (48) zusammenwirkt, um eine vordere Endstellung des Rastschiebers (36) festzulegen.

26. Längenverstellbarer Gabelbaum nach Anspruch 17 bis 25, dadurch **gekennzeichnet,**
daß der Rastschieber (36) mittels eines Betätigungszapfens (39) entgegen der Federkraft in seine Freigabestellung zurückziehbar ist.

27. Längenverstellbarer Gabelbaum nach Anspruch 26,
dadurch **gekennzeichnet,**
daß der Betätigungszapfen (39) beweglich am Rastschieber (36) befestigt ist, so daß er zwischen einer Freigabestellung, in der er zurückziehbar ist, und einer Sperrstellung hin- und herbewegbar ist, in der er gegen einen Sicherungsanschlag (50) anliegt, durch den er gegen ein Zurückziehen gesichert ist.

28. Längenverstellbarer Gabelbaum nach Anspruch 27,
dadurch **gekennzeichnet,**
daß der Betätigungszapfen als T-förmiger Betätigungsknebel (39′) ausgebildet ist, der um eine senkrecht auf dem Rastschieber (36) stehende Achse (C) drehbar ist, und daß der Sicherungsanschlag (50) am hinteren Ende des Schlitzes (40) angeordnet ist.

29. Längenverstellbarer Gabelbaum nach Anspruch 27,
dadurch **gekennzeichnet,**
daß der Betätigungszapfen (39) um eine parallel zur Verschieberichtung (B) des Rastschiebers (36) liegende Achse (C′) in seine Sperrstellung umklappbar am Rastschieber (36) gelagert ist und daß der Sicherungsanschlag (50) seitlich neben dem Schlitz (40) angeordnet ist.

30. Längenverstellbarer Gabelbaum nach Anspruch 27,
dadurch **gekennzeichnet,**
daß der Betätigungszapfen (29) um eine quer zur Verschieberichtung (B) des Rastschiebers (36) liegende Achse nach hinten in seine Sperrstellung umklappbar am Rastschieber (36) gelagert ist und daß der Sicherungsanschlag (50) am hinteren Ende des Schlitzes (40) vorgesehen ist.

FIG.1

FIG.2

FIG.3

FIG.4

FIG.5b

FIG.5a

EP 0 293 928 A1

FIG.6

EP 0 293 928 A1

Fig. 7

EP 0 293 928 A1

Fig. 8

EP 0 293 928 A1

Fig. 9

Europäisches
Patentamt

# EUROPÄISCHER RECHERCHENBERICHT

Nummer der Anmeldung

EP 88 10 8936

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 071 220 (MISTRAL) <br> * Seite 18, Zeile 10 - Seite 19, Zeile 21; Figuren 5-11 * | 1-3,10-12,14-16 | B 63 B 35/82 |
| Y | DE-U-8 421 328 (SANDER SPEZIALWERKZEUG) <br> * Seite 3, Zeile 1 - Seite 5, Zeile 24 * | 1-3,10-12,14-16 | |
| Y | EP-A-0 163 061 (AKUTEC) <br> * Figuren 8-10 * | 1-3,6, 10,13 | |
| Y | EP-A-0 209 756 (SCAGLIA) <br> * Spalte 1, Zeilen 1-4; Spalte 4, Zeilen 10-13 * | 1-3,6, 10,13 | |
| A | FR-A- 439 302 (DUPEYRON) <br> * Figuren 2-5,8,9 * | 4,9 | |

| | RECHERCHIERTE SACHGEBIETE (Int. Cl.4) |
|---|---|
| | B 63 B <br> F 16 B |

Der vorliegende Recherchenbericht wurde für alle Patentansprüche erstellt

| Recherchenort | Abschlußdatum der Recherche | Prüfer |
|---|---|---|
| DEN HAAG | 31-08-1988 | HUNT A.E. |

EPO FORM 1503 03.82 (P0403)